Europäisches Patentamt

European Patent Office

Office européen des brevets

(11) Veröffentlichungsnummer: **0 467 209 A2**

# EUROPÄISCHE PATENTANMELDUNG

(21) Anmeldenummer: **91111479.1**

(22) Anmeldetag: **10.07.91**

(51) Int. Cl.5: **G07B 13/02**

(30) Priorität: **20.07.90 DE 4023110**

(43) Veröffentlichungstag der Anmeldung:
**22.01.92 Patentblatt 92/04**

(84) Benannte Vertragsstaaten:
**DE FR GB IT NL**

(71) Anmelder: **Mannesmann Kienzle GmbH**
**Heinrich-Hertz-Strasse 45**
**W-7730 Villingen-Schwenningen(DE)**

(72) Erfinder: **Adams, Jürgen, Dipl.-Ing. (FH)**
**Am Mühlweiher 1**
**W-7730 Villingen-Schwenningen(DE)**

(54) **Wegstreckenzähler.**

(57) Es wird ein Wegstreckenzähler (1) beschrieben, der eine laufende Anzeige der gefahrenen Wegstrecke im Einsatzbetrieb des Mietwagens verbindet mit einer gleichzeitigen, internen Berechnung eines Fahrpreises auf der Basis einer ständigen Registratur von Wegstrecken- und Wartezeitelementen. Eine Berechnung eines Fahrpreises ist ausschließlich bei Erkennung des Stillstandes des Fahrzeuges manuell oder automatisch auslösbar und in der Hauptanzeige 5 darstellbar. Die Preisparameter sind in Abhängigkeit von Uhrzeit und Kalendarium vorgebbar, so daß eine Fahrpreisfestlegung völlig unabhängig ist von einer individuellen Einflußnahme von Seiten des Fahrers.

Wegstreckenzähler der bezeichneten Art finden vornehmlich Anwendung in Fahrzeugen für den Mietwagenverleih.

FIG. 2

Die Erfindung betrifft einen Wegstreckenzähler zum Zweck der Anzeige einer gefahrenen Wegstrecke in einem Mietwagen mit Fahrer.

Es ist bekannt, daß im Bereich des Verleihs von Kraftfahrzeugen mit Fahrer zum Zwecke der Abrechnung einer Dienstleistung die Fahrzeuge mit einem geeichten Wegstreckenzähler ausgestattet sind. Das vom Fahrer über einen Bedienvorgang durch Betätigung eines Schalters einschaltbare Gerät zeigt auf einem mehrstelligen Zählwerk die vom Beginn der Dienstleistungsfahrt aufsummierte Wegstrecke an. Für die Umrechnung der gefahrenen Wegstrecke steht dem Fahrer eine Tabelle zur Verfügung, aus der der Fahrer unter Einbeziehung zusätzlicher Einflußgrößen den ihm zustehenden Fahrpreis ermittelt. Es obliegt also individuell dem Fahrer, den "richtigen Tarif" aus der Tabelle bei der Umrechnung in einen Fahrpreis auszuwählen und anzuwenden. Geht man davon aus, daß die in der Tabelle aufgelisteten Tarife von einer Vielzahl von unterschiedlichen Einflußgrößen abhängig sind, so ist es leicht möglich, daß dem Kunden aufgrund einer nicht korrekten Ablesung des Fahrpreises aus der Tabelle ein erhöhter Fahrpreis berechnet wird. Eine Kontrolle der Berechnung ist nicht möglich, da der Kunde in aller Regel keine Möglichkeit der persönlichen Einsichtnahme in die Umrechentabelle hat. Die Tabelle enthält überdies Tarife, in die den Fahrpreis anhebende Einflußgrößen einbezogen sind und bei falscher Anwendung den Kunden ausschließlich einen erhöhten Fahrpreis bescheren. Den Fahrpreis anhebende Einflußgrößen sind z. B. Fahrten an Sonn- und Feiertagen, zur Nachtzeit und dergl., wo eine Anhebung der Dienstleistungsbeträge an sich berechtigt erscheint. Jedoch sollten erhöhte Tarife auch nur für die dafür vorgesehenen Sonderschichten zur Anwendung gelangen. Solche Nachteile bedingt durch fehlerhafte Handhabung gilt es zu vermeiden.

Die Art und Weise über die Ablesung eines Wegstreckenzählers unter Zuhilfenahme einer Tabelle schließlich einen Fahrpreisbetrag zu ermitteln, entspricht aber auch neben der Anfälligkeit für Manipulationen nicht mehr einer zeitgemäßen Methode zur Ermittlung eines Fahrpreises. Auch hier gilt es, die Nachteile der zeitraubenden Ermittlung des Fahrpreises durch eine neue Lösung für eine manipulationsfreie Berechnung des Fahrpreises zu ersetzen.

Aus Gründen der Bauart-Zulassung für Wegstreckenzähler ist eine direkte, d. h. eine unmittelbar laufende Anzeige eines Fahrpreises anstelle der bisherigen Wegstreckenanzeige beim Wegstreckenzähler der eingangs genannten Art nicht zulässig. Die unmittelbare Anzeige von Fahrpreisbeträgen bleibt der Geräteausbildung eines Taxameters für eine Betriebsweise im Taxifahrzeugbereich vorbehalten.

Aufgabe der Erfindung ist es, die angegebenen Nachteile zu vermeiden und einen Wegstreckenzähler der eingangs bezeichneten Art so auszubilden, daß damit auf Anforderung neben der üblichen Wegstreckenanzeige eine Fahrpreisermittlung und -anzeige auslösbar ist.

Die Lösung für einen Wegstreckenzähler der eingangs erklärten Art ist gekennzeichnet durch eine laufende Anzeige der gefahrenen Wegstrecke im Einsatzbetrieb des Mietwagens und eine gleichzeitige interne Berechnung eines Fahrpreises auf der Basis einer ständigen Registratur von Wegstrecken- und Wartezeitelementen.

In den Unteransprüchen sind weitere Merkmale einer Ausbildungsform eines Wegstreckenzählers gegeben.

Die in dem Ausführungsbeispiel beschriebene Lösung sieht vor, den bisherigen Wegstreckenzähler dahingehend zu erweitern, daß mittels geringem Aufwand an Schaltungs- und Steuerungsmitteln parallel zur Funktion der Wegstreckenanzeige eine interne Berechnung eines Fahrpreises stattfindet. Aufgrund des im Fahrbetrieb ständig angezeigten Wegstreckenbetrages und des praktisch "im Hintergrund", d. h. von außen unbemerkt, aus Strecken- und Wartezeitelementen ermittelbaren Fahrpreises kann somit den Zulassungsvorschriften entsprochen werden. Mit dem parallel zur Streckenanzeige laufenden Modus einer internen Preisberechnung über fest vorgegebene Parameter entfällt die umständliche und zeitraubende Ermittlung des Fahrpreises mittels einer Preistabelle. Darüber hinaus wird aber auch jeder Versuch einer betrügerischen Anwendung der Fahrpreistabelle unterbunden. Durch den totalen Wegfall der Preistabelle wird also jeder Versuch der Manipulation bei der Bestimmung des Fahrpreises verhindert und durch eine vom Fahrer unbeeinflußbare, automatische Preisbildung ersetzt.

Im folgenden ist die Erfindung unter Bezugnahme auf die Zeichnungen näher erläutert.

Es zeigt die

Fig. 1 eine schematisierte Darstellung des Anzeigefeldes eines Wegstreckenzählers,

Fig. 2 ein schematisiertes Blockschaltbild zur Bildung der Funktions-Stufen eines Wegstreckenzählers.

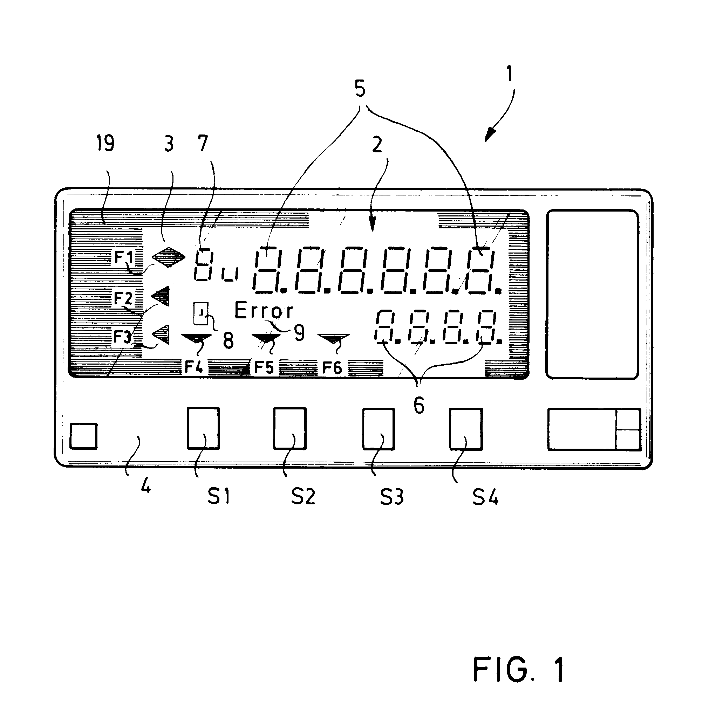

Die in Fig. 1 dargestellte Abbildung zeigt die Frontseite eines Wegstreckenzählers 1 gemäß der nachfolgend beschriebenen Art. Beim Wegstreckenzähler 1 handelt es sich um ein geeichtes Gerät zur Ermittlung einer gefahrenen Gesamt-Wegstrecke in einem Mietfahrzeug. Grundlage zur Ermittlung der gefahrenen Wegstrecke bildet ein nicht näher angezeigter Impulsgeber, der je Radumdrehung eine bestimmte Anzahl Impulse eingangsseitig der Geräteelektronik bereitstellt und mittels einer Umrechnung über fahrzeugspezifische Konstanten die zurückgelegte Wegstrecke ständig anzeigt. Die Umrechnung der Strecken-Impulsfolge in Wegstrecken-Einheiten, beispielsweise der Dimension Meter und Kilometer, wird über einen Mikroprozessor gesteuert und das Ergebnis in ein Anzeigefeld 2 aufgetastet. Beim Anzeigefeld 2 handelt es sich um einen LC-Anzeige-Baustein (Liquid Crystal-Anzeige) oder Flüssigkristall-Anzeigebaustein 3, der für eine Auftastung einer Vielzahl von Ziffern und Symbolen entsprechend dem Anwendungsfall ausgebildet ist. Der Anzeigebaustein 3 wird in einem frontseitigen Gehäuserahmen 4 des Gerätes gehalten. Das Anzeigefeld 2 weist eine sechsstellige Hauptanzeige 5, eine vierstellige Nebenanzeige 6, eine einstellige Funktions-Stufenanzeige 7 auf. Bei den Anzeigeelementen 5, 6, 7 handelt es sich um 7-Segment-Anzeigen, die durch entsprechende Ansteuerung Ziffern abbilden, die jedoch aufgrund von beliebig ansteuerbaren Segmentkombinationen auch Wortsymbole anzeigen können. Darüber hinaus sind im Anzeigefeld 2 sechs frei parametrierbare Flags F1 bis F6 (pfeilartige Hinweiszeichen) vorgesehen, die beispielsweise der Unterstützung der Anzeige von Sonderfunktionen in den einzelnen Betriebszuständen dienen. Unter bestimmten Betriebsbedingungen (beispielsweise bei Fahrgeschwindigkeit unterhalb einer festgelegten Mindestgeschwindigkeit) können auch Zeitelemente in eine Registrierung der Dienstleistung einbezogen werden. Bei dem zuletzt genannten Betriebszustand signalisiert ein Uhrzeitsymbol 8 im Anzeigefeld 2, daß derzeitig Zeitelemente in die Registratur einfließen und gleichwertig zu Wegstreckenelementen in die Gesamtauswertung am Ende einer Tour aufgenommen werden. Schließlich ist ein Wortsymbol "Error" (9) vorgesehen, das einen Störfall anzeigt und in Verbindung mit einer zugeordneten Kennziffer den Störfall lokalisiert.

Zu der Hauptanzeige 5 ist zu bemerken, daß diese bei der Betriebsweise als Wegstreckenzähler laufend die gefahrene Wegstrecke in Km (Kilometer) registriert, beispielsweise durch additive Auftastung und Anzeige von 100 m-Streckenabschnitten in der Hauptanzeige.

Zur Aktivierung des Wegstreckenzählers und gleichzeitig zur Auslösung von Sonderfunktionen sind auf der frontseitigen Anzeige- und Bedienerseite vier Tastenschalter S1, S2, S3, S4 angeordnet, denen je nach Betriebszustand des Gerätes bestimmte Tastenschaltfunktionen zugeordnet sind. In der Standard-Betriebsweise dient der Tastenschalter S1 der Einschaltung des Gerätes und gleichzeitig der Zuschaltung der gewünschten Funktionsstufe sowie dem Aufruf aller zugeordneter Parameter, ausgehend vom im Anzeigefeld signalisierten Betriebszustand "FREI" durch das Flag F3.

Eine Standardfunktion des Tastenschalters S2 ist es, durch deren Betätigung beim Stillstand des Fahrzeuges eine Anzeige eines parallel zur laufenden Wegstrecke intern ermittelten Fahrpreises auszulösen und im Wechsel mit einer Ausblendung der bis dahin aktiven Anzeige der gefahrenen Wegstrecke in der Hauptanzeige 5 als Gesamtfahrpreis anzuzeigen.

Mit dem Tastenschalter S4 lassen sich durch wiederholte Betätigung Zuschlagsbeträge (Extras) auftasten, wobei die Summe der aufgetasteten Zuschlagsbeträge in der Nebenanzeige 6 angezeigt wird. Mit einer weiteren Bedienung des Tastenschalters S3 schließlich läßt sich bei Stillstand des Fahrzeuges die Summe bilden aus Fahrpreis plus Zuschlagbeträgen und in der Hauptanzeige 5 darstellen. Durch eine weitere Betätigung des Tastenschalters S3 läßt sich wiederum die Summentrennung herbeiführen, und es lassen sich die Teilbeträge in den Haupt-(5) und Nebenanzeigen 6 wieder getrennt darstellen. Eine Summentrennung der geschilderten Art läßt sich auch automatisch herbeiführen nach Ablauf einer definierbaren bzw. parametrierbaren Zeit.

Neben der Anzeige von Zuschlägen sind auf der Nebenanzeige 6 auch ein Preis/je km während einer Fahrt sowie Minuten einer Wartezeit anzeigbar.

Der während einer Wegstreckenzählung bei einer Fahrt "im Hintergrund" intern berechnete Fahrpreis wird gebildet unterhalb einer definierten Fahrgeschwindigkeit durch schrittweise Erhöhung des Fahrpreises in definierbaren Zeitintervallen und oberhalb dieser festgelegten Geschwindigkeit durch schrittweises Erhöhen des Fahrpreises in definierbaren Wegstreckenintervallen.

Die interne Berechnung des Fahrpreises erfolgt über eine Addition von Fortschaltbeträgen aus Weg- und Zeitintervallen in Form einer definierten Überlagerung der beiden Intervalltypen. Für den Fall, daß über den Beginn eines Fahrauftrages nachfolgend ein frühzeitiges und damit unrentables Ende einer Fahrt ausgelöst wird, läßt sich mit der Ermittlung eines Fahrpreises eine Berechnung eines Grundpreises auslösen, der die Einnahme eines Minimal-Fahrpreises gewährleistet.

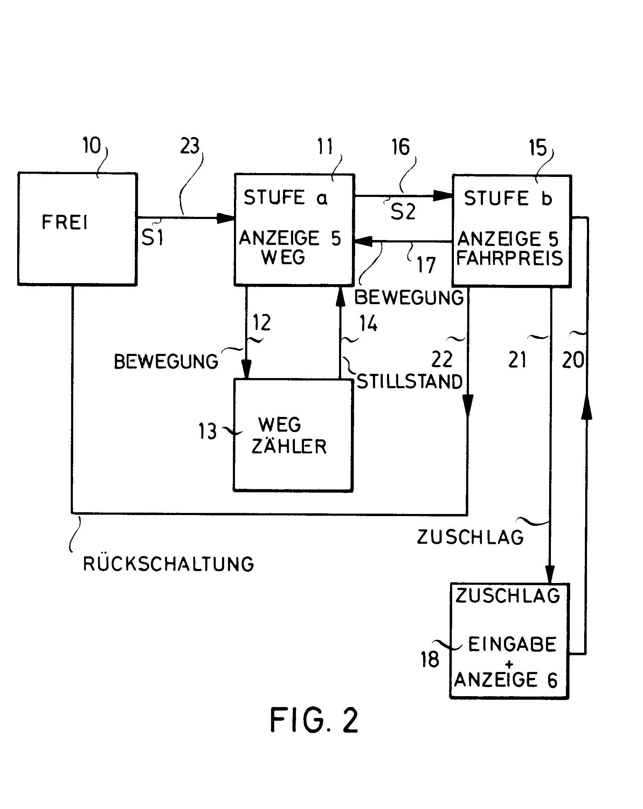

Die Funktionsstufe a nach Pos. 11 im Zustandsgraph gemäß Fig. 2 symbolisiert die normale Betriebsweise des Wegstreckenzählers und gibt während der Bewegung des Fahrzeuges die laufend ermittelte Wegstrecke zur Registrierung über eine Bewegungs-Übertragungsleitung 12 in die Wegzählstufe 13 weiter. Wird das Fahrzeug angehalten, so erfolgt über eine Leitung 14 eine Rückmeldung "Stillstand" an die Funktions-Stufe 11. In diesem Betriebszustand des Fahrzeuges ist, wie bereits dargelegt, durch Betätigung des Tastenschalters S2 die Anzeige des parallel bis dahin ermittelten Fahrpreises auslösbar. Andererseits wird der Zustand "Stillstand" des Fahrzeuges durch eine Detektions-Einrichtung (in 13) erkannt und nach Ablauf eines definierbaren Zeitintervalls ebenfalls die Anzeige des intern und parallel zur gefahrenen Wegstrecke ermittelbaren Fahrpreises über Leitung 16 durch eine Funktions-Stufe b bzw. 15 ermittelt und angezeigt im Wechsel mit der Ausblendung der Anzeige der gefahrenen Wegstrecke in der Hauptanzeige 5. Umgekehrt wird mittels der Detektionseinrichtung auch erkannt, wenn sich das Fahrzeug aus einer Stillstandsphase wieder in Bewegung setzt mit der Folge, daß über eine die Bewegung signalisierende Leitung 17 eine Rückschaltung der statischen Fahrpreisanzeige 15 (in 5) in die laufende Wegstreckenanzeige 11 erfolgt.

Bei einer Erkennung der Bewegung des Fahrzeuges aus dem Zustand des Stillstandes aufgrund eines aktivierten Streckenintervall-Signales und/oder eines Zeitintervall-Signales erfolgt eine Verzögerung der Rückschaltung der Fahrpreis-Anzeige 15 in den Zustand der Wegstrecken-Anzeige 11.

Aufgrund eines dem Wegstreckenzähler zugeordneten Fahrpreisrechners ergeben sich die Voraussetzungen, das Gerät in einer Mischbetriebsart als Wegstreckenzähler oder als Taxameter zu betreiben. Selektierbar über in den Steuerungsbereich eingebbare, tarifdatenbestimmte Einschaltsperren und Einschaltfreigaben ist dadurch in einem derart ausgebildeten Gerät die Betriebsart als Wegstreckenzähler oder als Taxameter anwählbar.

Eine Aktivierung der Einschaltsperren oder -freigaben zur Steuerung der einen oder anderen Betriebsart ist erzielbar durch eine Einführung von Uhrzeit- und/oder Kalenderparameter, durch welche in dem Gerät automatisch ein entsprechend vorgegebener Funktionsablauf steuerbar ist.

Schließlich ist im Zusammenhang mit der Betriebsart "Anzeige Fahrpreis" in der Funktionsposition 15 eine Vorrichtung 18 zur Eingabe eines Zuschlages gekoppelt, dergestalt daß über den Tastenschalter S4 durch wiederholte Betätigung desselben Zuschlagsbeträge eingebbar und in der Nebenanzeige 6 darstellbar und als solche durch Aktivierung eines Flag F 6 markierbar sind. Die Vorrichtung 18 steht in diesem Zusammenhang über eine Leitung 20 und eine Rückleitung 21 mit der Funktionsstufe b bzw. 15 (Anzeige 5, Fahrpreis) in Verbindung. In der gleichen Nebenanzeige 6 ist in der Betriebsart "Anzeige Wegstrecke" gemäß Funktions-Stufe a eine Einblendung eines Streckentarifs auslösbar, wobei zur Unterscheidung ein Hinweispfeil bzw. Flag F 4 ansteuerbar ist, der oder das einen entsprechenden Aufdruck auf einem Schriftblatt 19 vor dem Anzeigebaustein 3 markiert.

Zusammenfassend stellt sich der Ablauf eines Fahrauftrages wie folgt dar: Das Einschalten des Wegstreckenzählers erfolgt durch Betätigung des Tastenschalters S1 über eine Einschaltleitung 23 aus einer "FREI"-Position 10 in die Funktions-Stufe a bzw. 11. Der Streckenzähler 13 wird aktiviert, und das Ergebnis bei der Bewegung des Fahrzeuges als gefahrene Wegstrecke in der Hauptanzeige 5 angezeigt.

Der intern "im Hintergrund" ermittelte Fahrpreis wird iterativ nach Weg- und Zeitintervallen erhöht. Der Fahrpreis enthält je nach Erfordernis einen Grundbetrag, der als Minimal-Fahrpreis zur Anzeige gelangt, und eine Mindest-Einnahme gewährleistet. Letzteres ist dann der Fall, wenn der Wegstreckenzähler beispielsweise durch den Tastenschalter S2 in die Abrechnungs- bzw. Funktionsstufe b gemäß Pos. 15 geschaltet wird, ohne daß beispielsweise eine rentable, fahrpreisbildende Wegstrecke gefahren wurde.

Es wird generell zur Abrechnung mit einem Fahrgast bei Stillstand des Fahrzeuges durch eine Tastenbetätigung des Tastenschalters S2 über die Leitung 16 die Funktions-Stufe b bzw. 15 zugeschaltet. Es erfolgt hiermit die Anzeige des bis dahin ermittelten Fahrpreises in der Hauptanzeige 5. Sollte die Fahrt fortgesetzt werden, so schaltet das Gerät automatisch in die Funktionsstufe a mit aktueller Wegstreckenanzeige in der Hauptanzeige 5 zurück, z. B. durch die Detektion einer Fahrzeugbewegung.

Nach Abschluß der Fahrt wird jeweils aus der Funktions-Stufe 15 "Fahrpreisanzeige" über eine Rückschaltleitung 22 manuell durch Betätigung eines Tastenschalters S1 oder S2 in die FREI-Position (10) geschaltet. Um bei irgendwelchen Sondereinsatzfahrten, wie beispielsweise bei Nacht- und/oder Sonntagsfahrten, besondere Zuschläge zu berücksichtigen, können im Wegstreckenzähler grundsätzlich mehrere verschiedene Funktions-Stufen a', a'' usw. definiert werden, die dann z. B. uhrzeitabhängig/kalenderbhängig nur die vorgegebene Funktions-Stufe zur Einschaltung zulassen.

**Patentansprüche**

1. Wegstreckenzähler zum Zweck der Anzeige einer gefahrenen Wegstrecke in einem Mietwagen mit Fahrer,
gekennzeichnet durch
eine laufende Anzeige der gefahrenen Wegstrecke im Einsatzbetrieb des Mietwagens und eine gleichzeitige interne Berechnung eines Fahrpreises auf der Basis einer ständigen Registratur von Wegstrecken- und Wartezeitelementen.

2. Wegstreckenzähler nach Anspruch 1,
dadurch gekennzeichnet,
daß die interne Berechnung des Fahrpreises unterhalb einer definierten Geschwindigkeit durch schrittweise Erhöhung des Fahrpreises in definierbaren Zeitintervallen und über dieser Geschwindigkeit durch schrittweises Erhöhen des Fahrpreises in definierbaren Wegstreckenintervallen erfolgt.

3. Wegstreckenzähler nach Anspruch 2, dadurch gekennzeichnet, daß die interne Berechnung des Fahrpreises durch eine Addition von Fortschaltbeträgen aus Weg- und Zeitintervallen erfolgt in Form einer definierten Überlagerung beider Intervalltypen.

4. Wegstreckenzähler nach Anspruch 1, dadurch gekennzeichnet, daß in der Ermittlung eines Fahrpreises eine Berechnung eines Grundpreises vorgesehen ist.

5. Wegstreckenzähler nach Anspruch 1, dadurch gekennzeichnet, daß mit einer Betätigung eines Tastenschalters (S2) bei einem Stillstand des Fahrzeugs eine Anzeige des parallel zur laufenden Wegstrecke intern ermittelten Fahrpreises auslösbar ist im Wechsel mit einer Ausblendung der bis dahin aktiven Anzeige der gefahrenen Wegstrecke.

6. Wegstreckenzähler nach Anspruch 5, dadurch gekennzeichnet, daß mittels einer Detektion des Stillstandes des Fahrzeuges und nach Ablauf eines definierbaren Zeitintervalls bei Stillstand des Fahrzeuges die Anzeige des intern und parallel zur gefahrenen Wegstrecke ermittelbaren Fahrpreises auslösbar ist im Wechsel mit der Ausblendung der bis dahin aktiven Anzeige der gefahrenen Wegstrecke.

7. Wegstreckenzähler nach Anspruch 6, dadurch gekennzeichnet, daß mittels der Detektionseinrichtung der Zustand einer Bewegung des Fahrzeuges erkannt wird aufgrund der eine Rückschaltung von der statischen Fahrpreis-Anzeige in die laufende Wegstrecken-Anzeige erfolgt.

8. Wegstreckenzähler nach Anspruch 7, dadurch gekennzeichnet, daß nach der Erkennung der Bewegung aus dem Stillstand des Fahrzeuges durch ein Wegstreckenintervall und/oder ein Zeitintervall eine Verzögerung der Rückschaltung der Anzeige in den Zustand der Wegstrecken-Anzeige erfolgt.

9. Wegstreckenzähler nach Anspruch 1, dadurch gekennzeichnet, daß selektierbar durch tarifdatenbestimmte Einschaltsperren und Einschaltfreigaben eine Mischbetriebsart als Wegstreckenzähler oder als Taxameter in einem Gerät anwählbar ist.

10. Wegstreckenzähler nach Anspruch 9, dadurch gekennzeichnet, daß eine Aktivierung der Einschaltsperren für die Steuerung der Mischbetriebsart des Gerätes als Wegstreckenzähler und Taxameter durch Einführung von Uhrzeit- und/oder Kalenderparameter erzielbar ist.

11. Wegstreckenzähler nach Anspruch 9, dadurch gekennzeichnet, daß mit der Betriebsart Anzeige "Fahrpreis" eine Vorrichtung (18) zur Eingabe und Anzeige eines Zuschlages gekoppelt ist und an gleicher Nebenanzeige-Stelle in der Betriebsart-Anzeige "Wegstrecke" eine Einblendung eines Streckentarifs auslösbar ist, wobei zur Unter-scheidung jeweils ein zugeordneter Hinweis-pfeil (Flag, F6 und F4) ansteuerbar ist, der einen entsprechenden Aufdruck auf einem Schriftblatt (19) markiert.

FIG. 1

EP 0 467 209 A2

FIG. 2

7